# EUROPEAN PATENT SPECIFICATION

(11) **EP 1 801 443 B1**
(45) Date of publication and mention of the grant of the patent: **07.10.2009**
(21) Application number: 06256451.3
(22) Date of filing: 19.12.2006
(51) Int. Cl.: F16D 23/06

(54) **Synchromesh system**
Synchronisierungseinrichtung
Système de synchronisation

(30) Priority: 20.12.2005 JP 2005366972
(43) Date of publication of application: 27.06.2007
(73) Proprietor: Toyota Jidosha Kabushiki Kaisha, Toyota-shi Aichi 471-8571 (JP); AISIN AI Co., Ltd., Nishio-shi Aichi-ken 445-0006 (JP)
(72) Inventor: Etoh, Masao c/o TOYOTA JIDOSHA KABUSHIKI KAISHA, Aichi-ken 471-8571 (JP); Oshima, Ryo c/o AISIN AI Co., Ltd.,, Nishio-shi Aichi-ken, 445-0006 (JP)
(74) Representative: Albutt, Anthony John

(56) References cited:
- FR-A1- 2 742 501
- GB-A- 2 391 592

## Description

### BACKGROUND OF THE INVENTION

### 1. Field of the Invention

The present invention relates to a synchromesh system.

### 2. Description of the Related Art

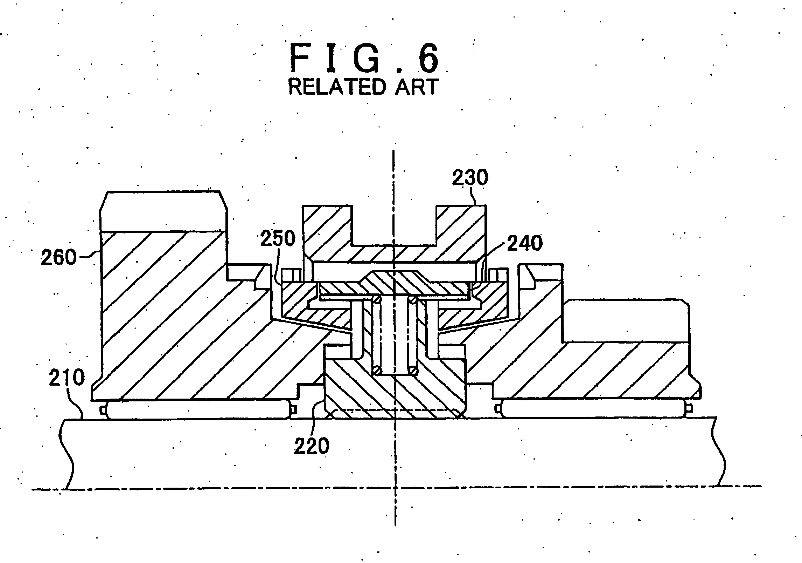

Generally, a vehicle gear transmission has a synchromesh system, which allows the rotations of two elements rotating at different speeds to be synchronized with each other upon gear-shifting in order to provide smooth gear changes. As an example of such synchromesh system, the one that has a key type synchromesh mechanism has been proposed. FIG. 6 is a cross sectional view of a synchromesh system having the key type synchromesh mechanism. As shown in FIG. 6, the synchromesh system includes a synchronizer hub 220, a sleeve 230, a synchronizer key 240, and a synchronizer ring 250 as main components. Each of these components of the synchromesh system is disposed over an outer circumference of a main shaft 210 of a gear transmission.

In such synchromesh system, the synchronizer hub 220 is provided on the main shaft 210 such that the hub rotates in conjunction with the main shaft 210 through spline engagement. A sleeve 230 is provided on the synchronizer hub 220 such that the sleeve is rotatable in conjunction with the synchronizer hub 220 through spline engagement and slidable in the axial direction. When the sleeve 230 slides toward a gear 260 in response to gear shifting for speed change, the synchronizer key 240 in engagement with the sleeve 230 also slide together toward the gear 260. Thus, the synchronizer key 240 presses the synchronizer ring 250, so that the ring 250 slides toward the gear 260 and is pressed against the gear 260. Pressing the synchronizer ring 250 against the gear 260 as described produces friction on a contact surface between the synchronizer ring 250 and the gear 260. This causes the gear 260 to rotate at a higher speed. Due to the friction thus produced, a difference in rotation speed between the synchronizer ring 250 and the gear 260, that is between the main shaft 210 and the gear 260, is reduced gradually. The reduced difference in rotation speed between the main shaft 210 and the gear 260 allows the sleeve 230 to slide further toward the gear 260, and then come into engagement sequentially with the synchronizer ring 250 and the gear 260. The complete engagement of the sleeve 230 and the,gear 260 with each other allows the main shaft 210 and the gear 260 to rotate at equal speeds. The synchronization process is therefore completed.

A friction force produced between the synchronizer ring 250 and the gear 260 is used for the synchronization process in the synchromesh system. In other words, the aforementioned key type synchromesh mechanism is solely designed to produce a friction force on only one contact surface between the synchronizer ring 250 and the gear 260 during gear-shifting. Accordingly, the output torque to be transmitted in the synchronization process is not large enough to provide smooth gear changes.

Thus, a different type of synchromesh system has also been proposed that has a triple cone synchromesh mechanism in which three synchronizer rings 310, 320, 330 are disposed one over the other in the radial direction. As seen from this system, the three synchronizer rings, disposed one over the other in the radial direction, increase the overall area of the contact surfaces between the synchronizer rings and the gear during gear-shifting, and therefore increase the friction force. The increase in friction force, called synchronizing capacity, enhances the synchronization effect in the synchromesh system.

Recently, with a move toward high-powered engines, there have been growing demands for synchromesh systems with larger synchronizing capacity. In order to meet such demands, new solutions have been proposed that install additional synchronizer ring in the triple cone synchromesh mechanism to increase the synchronizing capacity. Examples of such a system are disclosed in FR-A-2,742,501 A and GB 2,391,592 A. However, this can create a considerable disadvantage described below.

To be more specific, installing additional synchronizer ring to increase the synchronizing capacity requires the plural synchronizer rings to be disposed one over the other in the radial direction. Such an arrangement of these plural synchronizer rings in the synchromesh system inevitably results in an increase in structure size thereof in the radial direction.

### SUMMARY OF THE INVENTION

An object of the present invention is to provide a synchromesh system that minimizes the increase in size thereof in the radial direction, while ensuring the increased synchronizing capacity.

Means for achieving the foregoing object as well as functions and effects thereof will now be described as follows.

The first aspect of the invention relates to a synchromesh system including: a synchronizer hub rotating in conjunction with a main shaft; a sleeve rotating in conjunction with the synchronizer hub and displaceable in a rotation axis direction thereof relative to the synchronizer hub; a gear engaging with the sleeve displaced in the rotation axis direction to rotate in conjunction with the sleeve, the gear having a tapered surface; a first synchronizer ring rotating in conjunction with the synchronizer hub, displaced with the sleeve toward the gear for meshing the sleeve and the gear, and a second synchronizer ring rotating in conjunction with the first ring. A tapered pressing surface of the first ring is spaced from pressing surfaces of the second ring in the rotation axis direction. The gear includes a gear body meshing with the sleeve, and a movable portion rotating in conjunction with the gear body and displaceable relative to the gear body in the rotation axis direction. The movable portion is pressed by the tapered surface of the first ring in the meshing process of the sleeve and the gear, and the movable portion is displaced in the rotation axis direction toward the second ring. The second ring is sandwiched under pressure between tapered surfaces respectively formed on the gear body and the movable portion, thereby synchronizing the rotations of the sleeve and the gear with each other.

According to the first aspect of the invention, the first ring presses the movable portion for meshing of the sleeve and the gear, so that the movable portion is displaced (slides) toward the second ring. Consequently, the second ring is sandwiched under pressure between the movable portion and the gear body. This produces friction on respective contact surfaces between the movable portion and the second ring and between the second ring and the gear body. The friction thus generated on these contact surfaces results in increased synchronizing capacity in the synchromesh system. In addition, the second ring, which is sandwiched under pressure between the gear body and the movable portion, may be disposed on the side of the gear, instead of being arranged over the other rings in the radial direction on the side of the synchronizer hub. This minimizes the increase in structure size of the synchromesh system in the radial direction, while ensuring the increased synchronizing capacity.

In addition, in the synchromesh system recited in the first aspect of the invention, the gear may further include a third ring rotating in conjunction with the gear body and the third ring can be spaced apart from, but in close proximity to, the gear body in the rotation axis direction; the first ring may be constituted by a fourth ring rotating in conjunction with the synchronizer hub, and a fifth ring rotating in conjunction with the fourth ring and connected so as to be spaced apart from, but in close proximity to, the fourth ring in the rotation axis direction; and the third ring may be sandwiched under pressure between tapered surfaces respectively formed on the fourth and fifth rings in the meshing process of the sleeve and the gear.

A mechanism of the synchromesh system, which uses three synchronizer rings: an inner synchronizer ring, a middle synchronizer ring, and an outer synchronizer ring, is called a triple cone synchromesh mechanism. The synchromesh system that employs this triple cone synchromesh mechanism has larger synchronizing capacity than the capacity of other synchromesh systems using a single or double cone synchromesh mechanism. Thus, more effective synchronization is ensured. However, in this type of synchromesh system, since the plural synchronizer rings are disposed one over the other in the radial direction, installing additional synchronizer ring inevitably results in the size increase of the system in the radial direction.

In view of the foregoing problem, according to the feature of the present invention, even when the synchromesh system employs the triple cone synchromesh mechanism, whose structure does not easily allow additional synchronizer ring to be installed in the radial direction, the synchromesh system can accommodate an additional synchronizer ring to increase the synchronizing capacity.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a cross sectional view illustrating a configuration of a synchromesh system according to the first embodiment of the invention;
FIG. 2 is a partially enlarged cross sectional view of synchronizer rings and a movable portion in the synchromesh system of FIG. 1 ;
FIGs. 3A, 3B and 3C are plane and side views of the synchronizer rings and the movable portion in the synchromesh system of FIG. 1, respectively;
FIG. 4 is a schematic view illustrating gear engagement operation in the synchromesh system of FIG. 1;
FIG. 5 is a cross sectional view of the synchromesh system, showing a variation of the first embodiment;
FIG. 6 is a cross sectional view illustrating a configuration of the synchromesh system of the related art; and

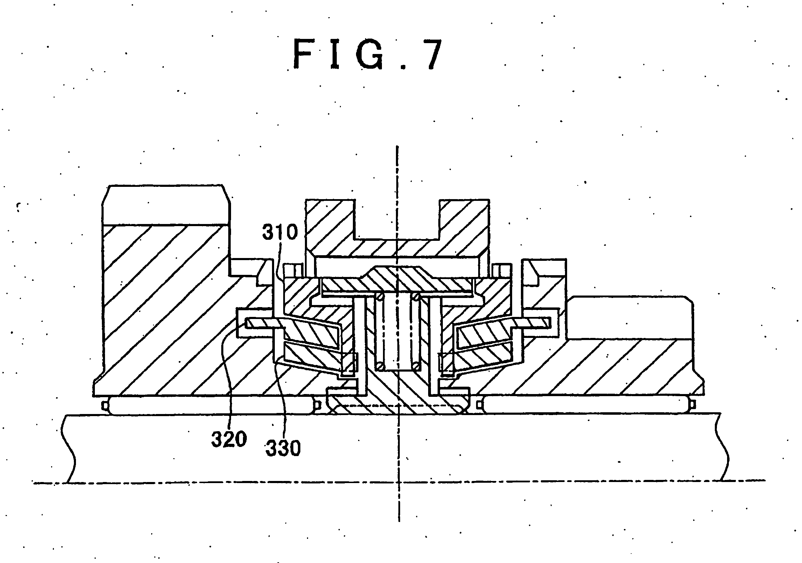

FIG. 7 is a cross sectional view of the synchromesh system, showing a different variation other than the variation of FIG. 6.

### DETAILED DESCRIPTION OF THE PREFERRED EMBODIMENTS

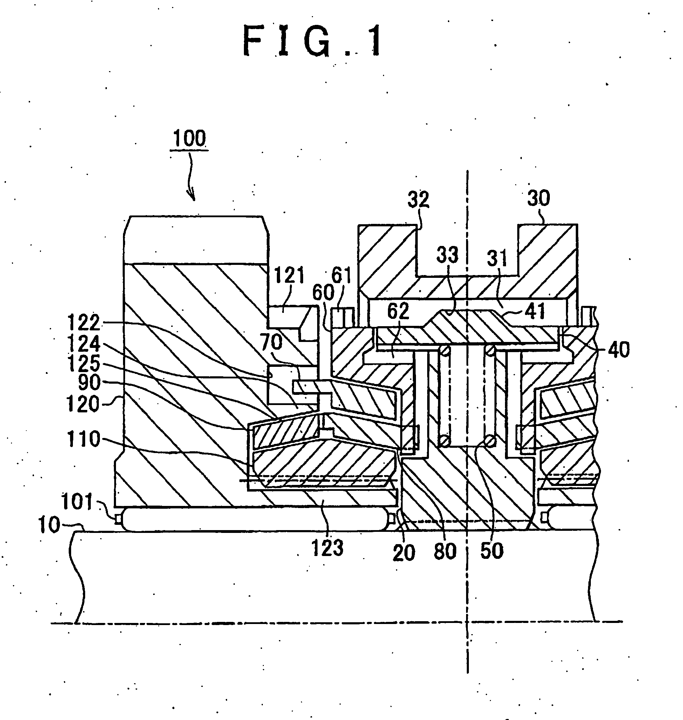

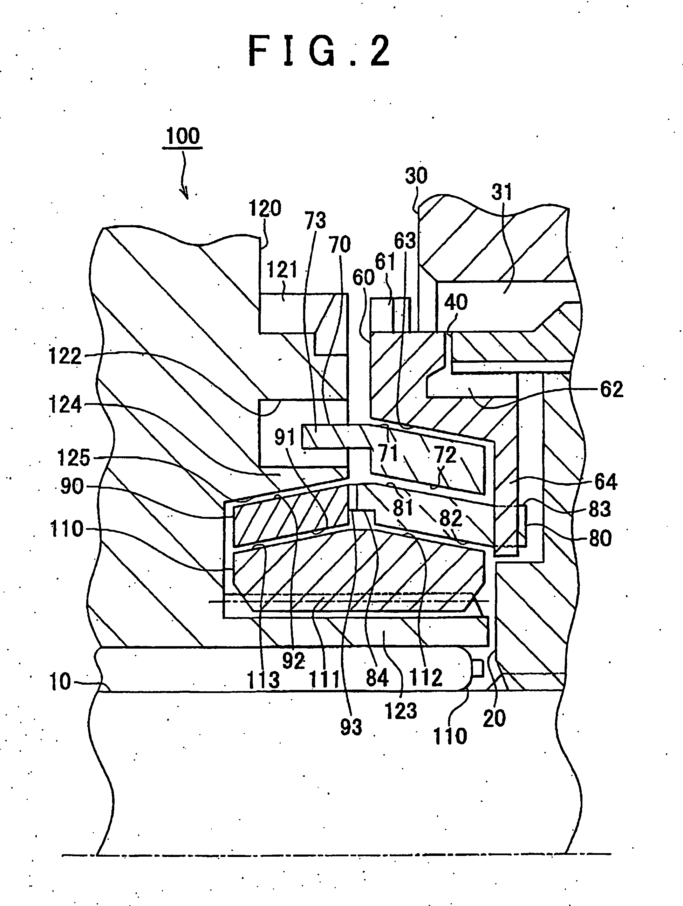

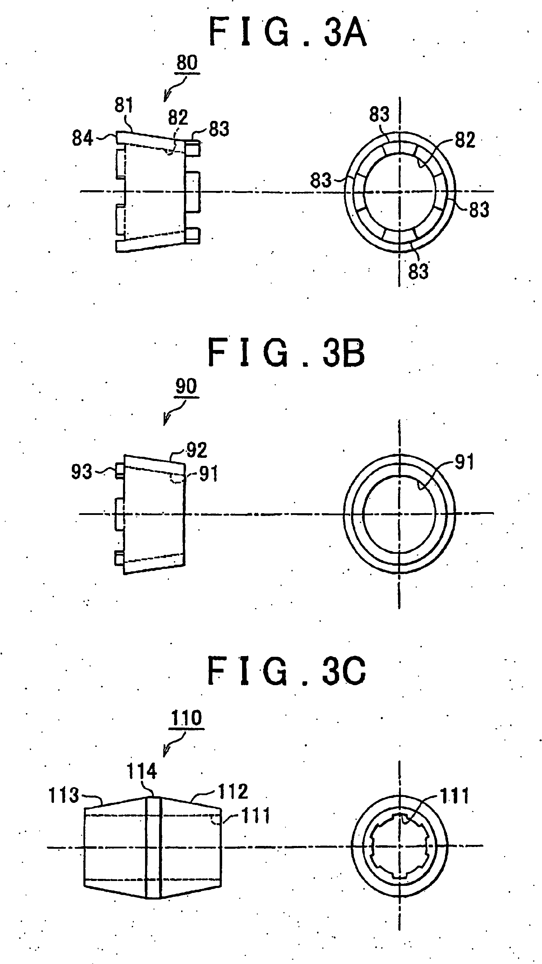

One embodiment of the present invention, to which a synchromesh system for a vehicle transmission is applied, will now be described with reference to FIGs. 1 to 4. FIG. 1 is a cross sectional view of the synchromesh system. FIG. 2 is a partially enlarged cross sectional view of synchronizer rings 60, 70, 80, 90 and a movable portion 110 of the synchromesh system of FIG. 1. FIGs. 3A, 3B and 3C are plane and side views of a first inner synchronizer ring 80, a second inner synchronizer ring 90 and a movable portion 110, respectively.

As shown in FIG. 1, the synchromesh system includes a synchronizer hub 20, a sleeve 30, a synchronizer key 40, and synchronizer rings 60, 70, 80, 90 as main components. Each of these components of the synchromesh system is disposed over an outer circumference of a main shaft 10 in a transmission.

The synchronizer hub 20 is provided on the main shaft 10 such that the hub is in spline engagement with the main shaft 10 and rotates in conjunction with the main shaft 10. The synchronizer hub 20 has external splines. The external splines are brought into engagement with internal splines 31 of the sleeve 30. Thus, the sleeve 30 can slide axially relative to the synchronizer hub 20 and rotate in conjunction with the synchronizer hub 20. An annular groove 32 is defined on an outer peripheral surface of the sleeve 30, into which a shift fork (not shown) is fitted.

The synchronizer hub 20 has plural external keyways provided at equal intervals in the circumferential direction of the hub and extending in the axial direction thereof. A synchronizer key 40 is fitted onto each keyway. A projection 41 protrudes outward from an axially central portion of the synchronizer key 40. The projection 41 is brought into engagement with an internal keyway 33 of the sleeve 30. The synchronizer key 40 is biased against the inner peripheral surface of the sleeve 30 by a key spring 50 mounted in an inside of the synchronizer hub 20.

A gear 100 is provided on the main shaft 10 rotatably through a bearing 101. The gear 100 includes a gear body 120 and a movable portion 110 provided on the gear body 120. The gear body 120 has splines 121 that are engageable with the splines 31 of the sleeve 30, a recess 122 located closer to the main shaft 10 than the splines 121, and a cone 124 located closer to the main shaft 10 than the recess 122 and protruding toward the synchronizer hub 20. An inner peripheral side of the cone 124 is tapered with a larger bore diameter toward the synchronizer hub 20, defining a pressed surface 125. In addition, the gear body 120 has a projection 123 that abuts against the bearing 101 and extends toward the synchronizer hub 20. The projection 123 has external splines.

As shown in FIG. 2, internal splines 111 of the movable portion 110 are engaged with the external splines of the projection 123. Thus, the movable portion 110 can slide axially relative to the gear body 120 and rotate in conjunction with the gear body 120. As shown in FIG. 3C, a parallel portion 114 is formed on the outer peripheral surface of the movable portion 110, which is located at the axial center thereof, such that the parallel portion 114 circumferentially surrounds the movable portion 110. A part of the movable portion 110, which is tapered from the parallel portion 114 to one of the ends, defines a pressed surface 112, while a part of the movable portion 110, which is tapered from the parallel portion 114 to the other end, defines a pressing surface 113.

As shown in FIG. 2, plural synchronizer rings 60, 70, 80, 90 are provided between the movable portion 110 and the sleeve 30. These synchronizer rings are an outer synchronizer ring 60 disposed on the outermost periphery, inner synchronizer rings 80 and 90 disposed on the innermost periphery, and a middle synchronizer ring 70 disposed between the innermost and outermost peripheries. In the following descriptions, one of the inner synchronizer rings 80 and 90, which is disposed closer to the synchronizer hub 20, is referred to as the first inner synchronizer ring 80, while the other inner synchronizer ring, which is disposed closer to the gear 100, is referred to as the second inner synchronizer ring 90.

The outer synchronizer ring 60 has external splines 61 at a location adjacent to the gear 100, with the splines 61 being engageable with the splines 31 of the sleeve 30. In addition, the outer synchronizer ring 60 has plural external keyways 62 provided at equal intervals in the circumferential direction thereof (one of the keyways is only shown in FIG. 2). Bringing the synchronizer key 40 into engagement with the corresponding one of the keyways 62 allows the outer synchronizer ring 60 to rotate in conjunction with the synchronizer hub 20. Further, the outer synchronizer ring 60 has a pressing surface 63 and a connecting portion 64. The pressing surface 63 is defined by a tapered portion of the outer synchronizer ring 60 with a smaller bore diameter toward the synchronizer hub 20. The connecting portion 64 extends toward the main shaft 10 and is disposed on the side of the synchronizer hub 20. The middle synchronizer ring 70 has a pressed surface 71 tapered parallel to the pressing surface 63.

The middle synchronizer ring 70 has plural projections 73 provided at equal intervals in the circumferential direction. Each projection extends toward the gear 100. The projection 73 is engaged with the recess 122 of the gear body 120. Thus, the middle synchronizer ring 70 can slide axially relative to the gear 100 and rotate in conjunction with the gear 100. The middle synchronizer ring 70 has, on its inner peripheral surface, a pressing surface 72 tapered parallel to the pressed surface 71. In contrast, the first inner synchronizer ring 80 has a pressed surface 81 tapered parallel to the pressing surface 72.

The first inner synchronizer ring 80 has, on its inner peripheral surface, a pressing surface 82 tapered parallel to the pressed surface 112 of the movable portion 110. As shown in FIG. 3A, the first inner synchronizer ring 80 has plural projections 83 provided at equal intervals in the circumferential direction and extending toward the synchronizer hub 20. These projections 83 are engaged with the connecting portion 64 of the outer synchronizer ring 60. Thus, the first inner synchronizer ring 80 can be axially spaced apart from, but in close proximity to, the outer synchronizer ring 60, as well as rotate in conjunction with the outer synchronizer ring 60.

As shown in FIG. 2, the second inner synchronizer ring 90 has, on its outer peripheral surface, a pressing surface 92 tapered parallel to the pressed surface 125 of the cone 124. In addition, the second inner synchronizer ring 90 has, on its inner peripheral surface, a pressed surface 91 tapered parallel to the pressing surface 113 of the movable portion 110. The second inner synchronizer ring 90 has projections 93 extending toward the synchronizer hub 20. The first inner synchronizer ring 80 has projections 84 extending toward the gear 100. The first and second inner synchronizer rings 80 and 90 can be engaged such that each projection 84 is received in the corresponding recessed portion between the projections 93 of the second inner synchronizer ring 90, while each projection 93 is received in the corresponding recessed portion between the projections 84 of the first inner synchronizer ring 80. Thus, the second inner synchronizer ring 90 can be axially spaced apart from, but in close proximity to, the first inner synchronizer ring 80 and rotate in conjunction with the first inner synchronizer ring 80.

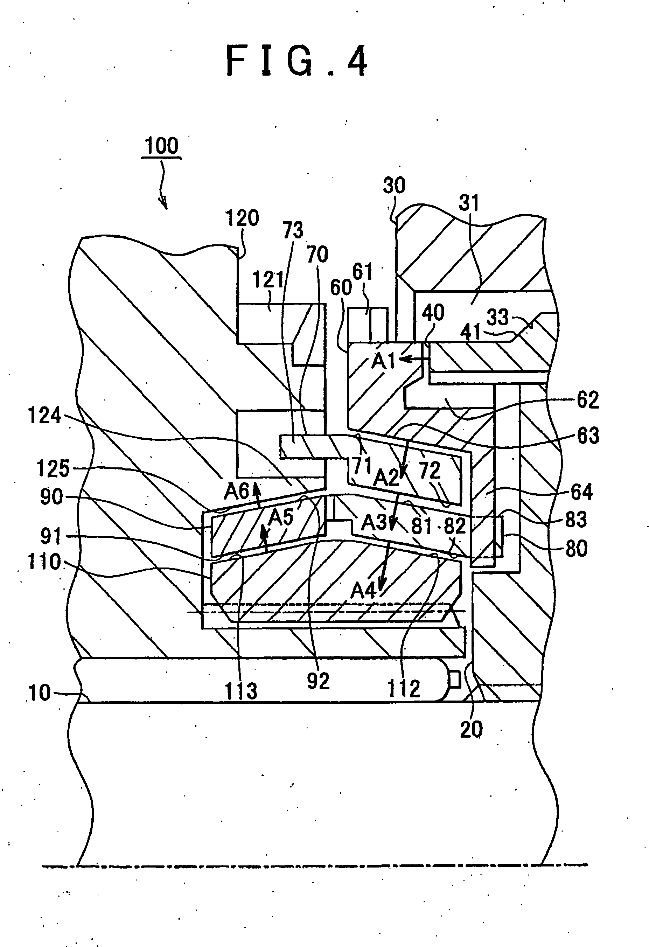

Synchronization in the synchromesh system during gear-shifting will now be described in details with reference to FIG. 4.

FIG. 4 is a schematic view for describing the operation of the synchromesh system in the synchronization process. In FIG. 4, the arrows A1 to A6 indicate the sequence of movements of components in the synchronization process.

Until the sleeve 30 starts engaging with the gear 100, the sleeve is located apart from the gear 100, with the splines 31 of the sleeve 30 being in engagement only with the splines of the synchronizer hub 20. More specifically, until the sleeve 30 starts engaging with the gear 100, the splines 31 are engaged with neither the splines 61 of the outer synchronizer ring 60, nor the splines 121 of the gear body 120. Thus, the gear 100 is freely rotatable relative to the synchronizer hub 20 or the main shaft 10.

When gear-shifting starts, first the clutch is disengaged to shut off power transmission from the engine to the main shaft 10. In response to the gear-shift operation by the driver, the sleeve 30 in engagement with the shift fork slides toward the gear 100. The synchronizer key 40, whose projection 41 has been fitted into the keyway 33 of the sleeve 30, is then displaced toward the gear 100 in conjunction with the sleeve 30 (A1). This allows the synchronizer key 40 to press the outer synchronizer ring 60, so that the ring 60 slides with the sleeve 30 toward the gear 100. The pressing surface 63 of the outer synchronizer ring 60 thus presses the pressed surface 71 of the middle synchronizer ring 70 (A2), which generates friction between these pressing and pressed surfaces, and also causes the middle synchronizer ring 70 to slide toward the gear 100. Subsequently, the pressing surface 72 of the middle synchronizer ring 70 presses the pressed surface 81 of the first inner synchronizer ring 80 (A3), which generates friction between these pressing and pressed surfaces, and also causes the first inner synchronizer ring 80 to slide toward the gear 100. Consequently, the pressing surface 82 of the first inner synchronizer ring 80 presses the pressed surface 112 of the movable portion 110 (A4), which generates friction between these pressing and pressed surfaces, and also causes the movable portion 110 to slide toward the gear 100. Then, the pressing surface 113 of the movable portion 110 presses the pressed surface 91 of the second inner synchronizer ring 90 (A5), which generates friction between these pressing and pressed surfaces, and also causes the second inner synchronizer ring 90 to slide toward the gear 100. Finally, the pressing surface 92 of the second inner synchronizer ring 90 presses the pressed surface 125 of the cone 124 (A6), which generates friction between these pressing and pressed surfaces. The first and second inner synchronizer rings 80 and 90 are engaged with each other such that the rings can be spaced apart from, but in close proximity to, each other. Therefore, the pressing surface 113 of the movable portion 110 and the pressing surface 92 of the second inner synchronizer ring 90 respectively come into tight contact with the pressed surface 91 of the second inner synchronizer ring 90 and the pressed surface 125 of the gear body 120.

Due to the friction thus generated, a difference in rotation speed between the outer synchronizer ring 60, the first inner synchronizer ring 80 and the second inner synchronizer ring 90, and a difference in rotation speed between the middle synchronizer ring 70, the movable portion 110 and the gear body 120 are both reduced gradually.

Then, the shift fork moves the sleeve 30 slidingly further toward the gear 100, which releases the fitting between the keyway 33 of the sleeve 30 and the projection 41 of the synchronizer key 40 to permit the sliding displacement of the sleeve 30 toward the gear 100. Due to such displacement, the splines 31 of the sleeve 30 are allowed to come into engagement with the splines 61 of the outer synchronizer ring 60.

However, under the current conditions, friction is produced between the outer synchronizer ring 60 and the middle synchronizer ring 70. This friction displaces the outer synchronizer ring 60 in the circumferential direction within the play allowed by the synchronizer key 40 and the keyway 62. More specifically, a slight rotational phase shift occurs between the sleeve 30 with the splines 31 and the outer synchronizer ring 60 with the splines 61. Thus, one end face of the splines 31 on the side closer to the gear 100 abuts against one end face of the splines 61 on the side closer to the synchronizer hub 20. This restricts the sliding displacement of the sleeve 30, and therefore the sleeve 30 presses the outer synchronizer ring 60 directly. Consequently, the pressing surface 63 of the outer synchronizer ring 60 comes into tight contact with the pressed surface 71 of the middle synchronizer ring 70. This results in an increase in friction force to be generated between the outer synchronizer ring 60 and the middle synchronizer ring 70. According to this increase, the friction forces, generated respectively between the middle synchronizer ring 70 and the first inner synchronizer ring 80 and between the first inner synchronizer ring 80 and the movable portion 110, increase also. Accordingly, the friction forces, generated respectively between the movable portion 110 and the second inner synchronizer ring 90 and between the second inner synchronizer ring 90 and the gear body 120, also increase. This brings the gear 100 and the main shaft 10 into synchronous rotation. They rotate at approximately the same speed.

When the synchronization process is completed, the sleeve 30 slides further toward the gear 100 to come into engagement with the splines 61 of the outer synchronizer ring 60 and the splines 121 of the gear body 120. With this engagement, the engagement process of the gear 100 for gear-shifting reaches the end.

According to the embodiment of the invention, the following functions and effects are achieved as has been discussed in detail.

(1) The movable portion 110 is pressed by the' first inner synchronizer ring 80 in the meshing process of the sleeve 30 and the gear 100. Thus, the movable portion 110 slides toward the second inner synchronizer ring 90, so that the second inner synchronizer ring 90 is sandwiched under pressure between the movable portion 110 and the cone 124 of the gear body 120. Therefore, friction is produced respectively on a contact surface between the movable portion 110 and the second inner synchronizer ring 90 and on another contact surface between the second inner synchronizer ring 90 and the gear body 120. The friction thus generated on these contact surfaces results in increased synchronizing capacity in the synchromesh system. In addition, the second inner synchronizer ring 90, which is sandwiched under pressure between the gear body 120 and the movable portion 110 of the gear 100, may be disposed on the side of the gear 100, instead of being arranged over the other rings in the radial direction on the side of the synchronizer hub 20. This minimizes the increase in structure size of the synchromesh system in the radial direction, while ensuring the increased synchronizing capacity

(2) Even when the synchromesh system employs a triple cone synchromesh mechanism, whose structure does not easily allow additional synchronizer ring to be installed in the radial direction, the synchromesh system can additionally accommodate the second inner synchronizer ring 90 to increase the synchronizing capacity.

It should be understood that the present invention is not limited to the aforementioned embodiment, but may also be modified to another embodiment as appropriate, which will be discussed below.

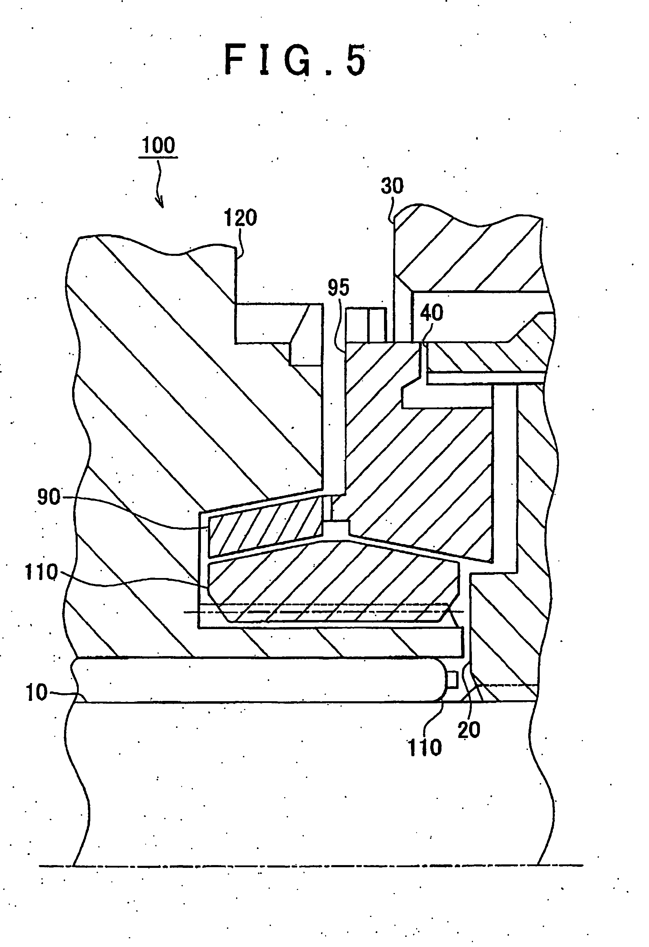

As shown in FIG. 5, an alternative configuration of the synchromesh system may be used that has no middle synchronizer ring 70. Such synchromesh system is provided with a synchronizer ring 95 formed by combining the outer synchronizer ring 60 and the first inner synchronizer ring 80 into one unit.

Although the movable portion 110 and the gear body 120 are in spline engagement in the aforementioned embodiment, the present invention is not limited to such engagement. In short, the movable portion 110 and the gear body 120 may be engaged with each other in any manners, as long as the movable portion 110 is displaceable relative to the gear body 120 in the axial direction and rotatable in conjunction with the gear body.

## Claims

1. A synchromesh system comprising: a synchronizer hub (20) rotating in conjunction with a main shaft (10); a sleeve (30) rotating in conjunction with the synchronizer hub (20) and displaceable in a rotation axis direction thereof relative to the synchronizer hub; a gear (100) engaging with the sleeve (30) displaced in the rotation axis direction to rotate in conjunction with the sleeve (30), the gear (100) having a tapered surface; a first synchronizer ring rotating in conjunction with the synchronizer hub (20), displaced with the sleeve (30) toward the gear (100) in the meshing process of the sleeve (30) and the gear (100); and a second synchronizer ring (90) rotating in conjunction with the first ring (80, 95) wherein:
a tapered pressing surface of the first ring (80, 95) is spaced from pressing surfaces of the second ring (90) in the rotation axis direction;
the gear (100) includes a gear body (120) meshing with the sleeve (30), and a movable portion (110) rotating in conjunction with the gear body and displaceable relative to the gear body (120) in the rotation axis direction; and
the movable portion (110) is pressed by the tapered pressing surface of the first ring (80, 95) in the meshing process of the sleeve (30) and the gear (100), thereby displacing the movable portion in the rotation axis direction toward the second ring (90), whereby the second ring (90) is sandwiched under pressure with the pressing surfaces of the second ring between tapered surfaces respectively formed on the gear body (120) and the movable portion (110) thereby synchronizing the rotations of the sleeve (30) and the gear (100) with each other.

2. The synchromesh system according to claim 1, wherein
the gear (100) further comprises a third ring (70) rotating in conjunction with the gear body (120), wherein the third ring (70) and the gear body (120) are separable from each other in the rotation axis direction;
the first ring (95) is constituted by a fourth ring (60) rotating in conjunction with the synchronizer hub, and a fifth ring (80) rotating in conjunction with the fourth ring (60), wherein the fifth ring (80) and the forth ring (60) are separable from each other in the rotation axis direction; and
the third ring (70) is sandwiched under pressure between tapered surfaces respectively formed on the fourth and fifth rings (60, 80) in the meshing process of the sleeve (30) and the gear (100).

## Patentansprüche

1. Synchrongetriebesystem mit einer Synchronisierungseinrichtungsnabe (20), die sich in Verbindung mit einer Hauptwelle (10) dreht; einer Hülse (30), die sich in Verbindung mit der Synchronisierungseinrichtungsnabe (20) dreht und in ihre Drehachsenrichtung relativ zu der Synchronisierungseinrichtungsnabe verschiebbar ist; einem Ritzel (100), das mit der in die Drehachsenrichtung verschiebbaren Hülse (30) eingreift, um sich in Verbindung mit der Hülse (30) zu drehen, und das Ritzel (100) eine Konusfläche aufweist; einem ersten Synchronring, der sich in Verbindung mit der Synchronisierungseinrichtungsnabe (20) dreht, und der bei dem Eingreifprozess der Hülse (30) und des Ritzels (100) mit der Hülse (30) zu dem Ritzel (100) hin verschoben wird; und einem zweiten Synchronring (90), der sich in Verbindung mit dem ersten Ring (80, 95) dreht, wobei:
eine Konuspressfläche des ersten Rings (80, 95) von Pressflächen des zweiten Rings (90) in der Drehachsenrichtung beabstandet ist;
das Ritzel (100) einen Ritzelkörper (120), der mit der Hülse (30) eingreift, und einen beweglichen Abschnitt (110) aufweist, der sich in Verbindung mit dem Ritzelkörper dreht und relativ zu dem Ritzelkörper (120) in die Drehachsenrichtung verschiebbar ist; und
der bewegliche Abschnitt (110) durch die Konuspressfläche des ersten Rings (80, 95) bei dem Eingreifprozess der Hülse (30) und des Ritzels (100) gepresst wird, um **dadurch** den beweglichen Abschnitt in die Drehachsenrichtung zu dem zweiten Ring (90) hin zu verschieben, wodurch der zweite Ring (90) unter einem Druck der Pressflächen des zweiten Rings zwischen jeweils an dem Getriebekörper (120) und dem beweglichen Abschnitt (110) ausgebildeten Konusflächen eingeschoben wird, um **dadurch** die Drehung der Hülse (30) und die Drehung des Ritzels (100) miteinander zu synchronisieren.

2. Synchrongetriebesystem nach Anspruch 1, wobei
das Ritzel (100) des Weiteren einen dritten Ring (70) aufweist, der sich in Verbindung mit dem Ritzelkörper (120) dreht, wobei der dritte Ring (70) und der Ritzelkörper (120) voneinander in der Drehachsenrichtung trennbar sind;
der erste Ring (95) durch einen vierten Ring (60), der sich in Verbindung mit der Synchronisierungseinrichtungsnabe dreht, und einen fünften Ring (80) gebildet ist, der sich in Verbindung mit dem vierten Ring (60) dreht, wobei der fünfte Ring (80) und der vierte Ring (60) voneinander in der Drehachsenrichtung trennbar sind; und
bei dem Eingreifprozess der Hülse (30) und des Ritzels (100) der dritte Ring (70) unter einem Druck zwischen jeweils an dem vierten und dem fünften Ring (60, 80) ausgebildeten Konusflächen eingeschoben wird.

## Revendications

1. Système synchroniseur comprenant: un moyeu synchroniseur (20) qui se met en rotation en même temps qu'un arbre principal (10); un manchon (30) qui se met en rotation en même temps que le moyeu synchroniseur (20) et qui peut être déplacé dans le sens d'un axe de rotation correspondant par rapport au moyeu synchroniseur; un engrenage (100) qui se met en prise avec le manchon (30) déplacé dans le sens de l'axe de rotation pour se mettre en rotation en même temps que le manchon (30), l'engrenage (100) ayant une surface conique; une première couronne de synchronisation se mettant en rotation en même temps que le moyeu synchroniseur (20), déplacée avec le manchon (30) vers l'engrenage (100) au cours du processus de prise entre le manchon (30) et l'engrenage (100); et une seconde couronne de synchronisation (90) se mettant en rotation en même temps que la première couronne (80, 95) dans lequel:
une surface de pression conique de la première couronne (80, 95) est écartée de surfaces de pression de la seconde couronne (90) dans le sens de l'axe de rotation;
l'engrenage (100) comporte un corps (120) d'engrenage se mettant en prise avec le manchon (30), et une partie mobile (110) se mettant en rotation en même temps que le corps de l'engrenage et que l'on peut déplacer par rapport au corps (120) de l'engrenage dans le sens de l'axe de rotation; et
au cours du processus de prise entre le manchon (30) et l'engrenage (100), la surface de pression conique de la première couronne (80, 95) appuie sur la partie mobile (110), déplaçant ainsi la partie mobile dans le sens de l'axe de rotation vers la seconde couronne (90), de sorte que la seconde couronne (90) soit prise en tenaille sous pression avec les surfaces de pression de la seconde couronne entre des surfaces coniques formées respectivement sur le corps (120) de l'engrenage et la partie mobile (110) synchronisant ainsi les rotations du manchon (30) et de l'engrenage (100).

2. Système synchroniseur selon la revendication 1, dans lequel
l'engrenage (100) comprend en outre une troisième couronne (70) se mettant en rotation en même temps que le corps (120) de l'engrenage, dans lequel la troisième couronne (70) et le corps (120) de l'engrenage peuvent être séparés l'un de l'autre dans le sens de l'axe de rotation;
la première couronne (95) est constituée par une quatrième couronne (60) se mettant en rotation en même temps que le moyeu synchroniseur, et une cinquième couronne (80) se mettant en rotation en même temps que la quatrième couronne (60), dans lequel la cinquième couronne (80) et la quatrième couronne (60) peuvent être séparées l'une de l'autre dans le sens de l'axe de rotation; et
la troisième couronne (70) est prise en tenaille sous pression entre des surfaces coniques formées respectivement sur les quatrième et cinquième couronnes (60, 80) dans le processus de prise entre le manchon (30) et l'engrenage (100).
